# EUROPEAN PATENT SPECIFICATION

(11) **EP 1 412 958 B1**
(45) Date of publication and mention of the grant of the patent: **08.09.2010**
(21) Application number: 02767261.7
(22) Date of filing: 23.07.2002
(51) Int. Cl.: H01H 71/52, H01H 71/50

(54) **KINEMATIC MECHANISM FOR A LOW-VOLTAGE PROTECTION AND/OR CURRENT INTERRUPTION DEVICE**
KINEMATISCHER MECHANISMUS FÜR EINEN NIEDERSPANNUNGSSCHALTER UND/ODER FÜR EINEN NIEDERSPANNUNGSSCHUTZ
MECANISME CINEMATIQUE POUR DISPOSITIF DE PROTECTION CONTRE LES BAISSES DE TENSION ET/OU D'INTERRUPTION DE COURANT

(30) Priority: 23.07.2001 IT MI20011574
(43) Date of publication of application: 28.04.2004
(73) Proprietor: ABB S.p.A., 20124 Milano (IT)
(72) Inventor: BERTOLOTTO, Bianc, Giuseppe, I-10020 Lauriano (TO) (IT); MALACALZA, Davide, I-20153 Milano (IT)
(74) Representative: Zanoli, Enrico
(86) International application number: PCT/EP2002/008325
(87) International publication number: WO 2003/010787

(56) References cited:
- EP-A- 0 897 186
- WO-A-97/19459
- FR-A- 2 605 454

## Description

The present invention relates to a kinematic mechanism for a low-voltage protection and/or current interruption device. More particularly, the invention relates to a kinematic mechanism for a low-voltage circuit breaker or for an auxiliary device for a low-voltage circuit breaker, such as an under-voltage relay, a shunt tripping relay, a signaling device, and the like.

It is known that low-voltage electrical systems normally use protection devices and/or circuit breakers whose basic task is to protect the system and the loads and users that it powers against any electrical faults or malfunctions, for example against short circuits, overloads, et cetera; these interventions are provided by producing the separation of suitable electrical contacts and consequently interrupting the flow of current that circulates in the system. Typical examples of circuit breakers normally used in low-voltage systems are constituted by magnetothermal or residual-current circuit breakers. In practice, these circuit breakers can be used both individually and in combination with accessory devices that allow to perform additional protection functions with respect to the basic ones provided by circuit breakers alone. Examples of protection devices that are used in association with a circuit breaker are the so-called shunt tripping relay, which causes the tripping of the switch depending on a remotely issued opening command, the so-called under-voltage relay, which is conceived so as to cause the circuit breaker to trip when the supply voltage drops below a preset threshold value, devices for signaling the state of the contacts of the associated circuit breaker that indicate, by means of an appropriate system, that the circuit breaker has tripped.

In these protection devices and/or circuit breakers, the separation of the contacts and the consequent interruption of the flow of current, as well as the reclosing of said contacts and the restoring of the normal operating conditions, occur by using a suitable kinematic mechanism that facilitates the transmission of the movement and of the forces between the actuation components and the moving contacts, thus allowing the movement of said moving contacts.

In many of the devices currently in use, a functionally important part of the kinematic mechanisms used is constituted by a pair of levers, which are arranged either coaxially on a same mounting axis or on two parallel axes and are operatively mutually coupled by a dedicated torsion spring.

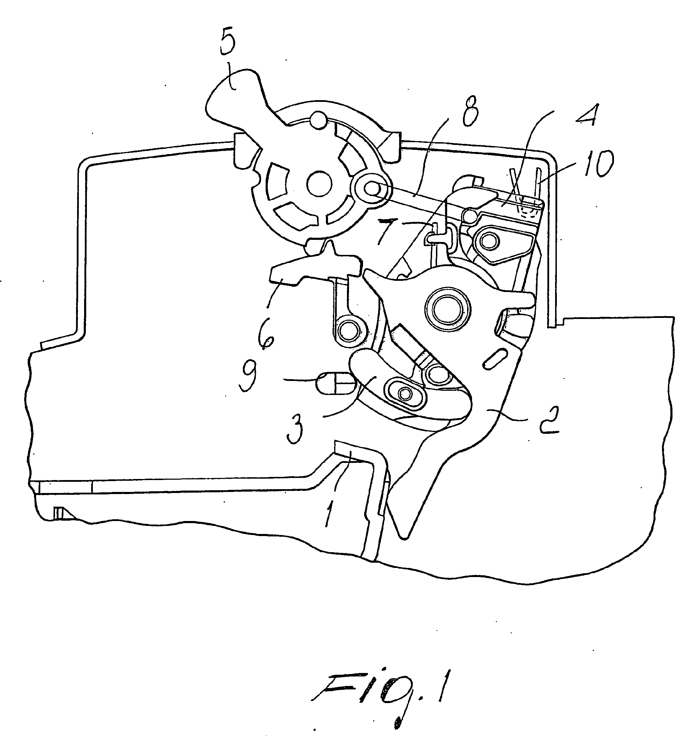

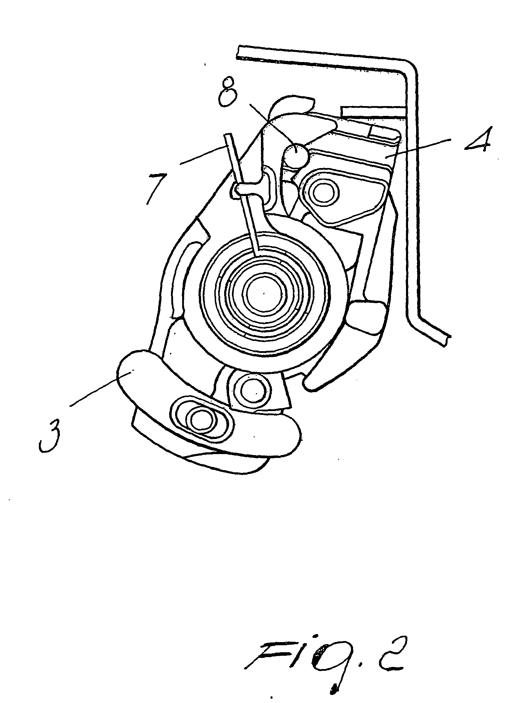

An example of a kinematic mechanism that uses said pair of levers with the corresponding spring is shown in Figure 1, which illustrates schematically an automatic circuit breaker of a known type, wherein: the reference numeral 1 designates the fixed contact of the circuit breaker, the reference numeral 2 designates the moving contact, the reference numeral 5 designates the arm for actuating the circuit breaker that acts on a retention lever 6 of the moving contact; the pair of levers with the corresponding torsion spring mentioned above are shown in greater detail in Figure 2 and are designated by the reference numerals 3, 4 and 7 respectively. In the specific application to a circuit breaker of the type of Figure 1, by virtue of the functions performed, said levers 3 and 4 are generally termed respectively "tripping lever" and "moving contact holder lever".

In normal operating conditions, for example when the circuit breaker is opened by virtue of the action of an operator on the actuation arm 5, the two levers 3 and 4 are kept together by the spring 7 in the position in which they trap an element 8, for example a U-shaped member or a linkage, for connection to said arm. In this case, the two levers can be considered as a single rigid body and constitute, together with the connecting element and the arm, an articulated mechanism with four rods.

In case of a possible fault event, for example a short circuit, a suitable protection device, such as an electromagnetic relay with a release element, schematically designated by the reference numeral 9 in Figure 1, acts on the kinematic mechanism, and particularly on the trip lever 3, which rotates with respect to the contact-carrying lever 4, allowing the release of the U-shaped member 8, which in turn slides within a seat of the lever 4. From this moment, the mechanism is divided into two parts, which are temporarily mutually disconnected. The combined action of the torsion spring 7 and of an additional spring 10, which push on the lever 4, in addition to the impact effect of the relay, cause the entire mechanism to rotate rapidly, allowing rapid separation of the moving contact from the fixed contact.

Once the operation has ended, the actuation of the arm 5 allows, by virtue of the U-shaped member 8, to reengage and drag simultaneously the levers 3 and 4, which are mutually coupled also by virtue of the spring 7, and to return the entire mechanism into the initial position with closed contacts.

A similar situation occurs when the above described kinematic mechanism, and particularly the two levers with the corresponding spring, are used in an accessory device that can be coupled to a circuit breaker. In these cases, the pair of levers with the corresponding spring, the actuation arm and the U-shaped member operate in a manner that is substantially similar to what has been described above, one of the levers being operatively coupled to the kinematic mechanism of the associated circuit breaker so as to transmit thereto the movement required for the movement of the moving contacts, or so as to receive from it the movement and therefore perform its intended function.

In any case, the use of such a kinematic mechanism in the various kinds of protection device and/or circuit breaker, despite allowing to achieve the intended aim, has some critical points.

In particular, the use of two separate levers plus the corresponding coupling torsion spring, in addition to affecting costs owing to the number of components used, entails problems both during design and most of all during assembly, since it requires correct positioning and precise calibrations; moreover, sensitivity to working tolerances is high and damaging clearance and vibration can occur. Document FR 2605454 discloses a device according to the preamble of claim 1.

The aim of the present invention is to provide a kinematic mechanism for a low-voltage protection and/or current interruption device that allows to obviate the above cited drawbacks and in particular can be produced with a smaller number of components than the known art while maintaining its functional performance.

Within the scope of this aim, an object of the present invention is to provide a kinematic mechanism for a low-voltage protection and/or current interruption device that allows to reduce considerably the difficulties and time required for assembly.

Another object of the present invention is to provide a kinematic mechanism for a low-voltage protection and/or current interruption device that allows to reduce significantly, if not eliminate, the presence of any clearance, as well as vibration and noise.

Another object of the present invention is to provide a kinematic mechanism for a low-voltage protection and/or current interruption device that is highly reliable, relatively simple to manufacture and at competitive costs.

This aim, these objects and others that will become apparent hereinafter are achieved by a kinematic mechanism for a low-voltage protection and/or current interruption device, comprising actuation means that are operatively associated with moving contact means that can be coupled/uncoupled with respect to corresponding fixed contact means, the moving contact means comprising at least one moving contact and the fixed contact means comprising at least one fixed contact, said actuation means comprising means for actuating and releasing the moving contact which are operatively connected to an actuation arm by virtue of connection means, whereby said means for the actuation and release of the moving contact comprise a body that has a first portion, which is operatively associated with said moving contact means and with said connection means, and a second portion, which is operatively associated with said connection means, the first and second portions being arranged coaxially on a common rotation axis and being connected by virtue of a third portion that comprises at least one first elastic and resilient element, said third portion allowing a mutual rotation of the first and second portions with respect to said common rotation axis.

Further characteristics and advantages of the invention will become apparent from the description of preferred but not exclusive embodiments of the kinematic mechanism according to the present invention, illustrated only by way of non-limitative example in the accompanying drawings, wherein:
Figure 1 is a schematic view of a portion of an automatic circuit breaker with a kinematic mechanism according to the background art;
Figure 2 is a schematic view of the release lever and moving contact-carrying lever, with the torsion spring, according to the background art, for the circuit breaker shown in Figure 1; and
Figure 3 is a perspective view of a first embodiment of means for the actuation and release of moving contacts of the kinematic mechanism according to the present invention.

In the description that follows, the kinematic mechanism according to the invention is illustrated with particular reference to its use in an automatic low-voltage circuit breaker, without thereby intending to limit the scope of its application in any way.

As mentioned, Figure 1 is a schematic view of components of an automatic low-voltage circuit breaker with the corresponding kinematic mechanism. According to embodiments that are widely known in the art, said kinematic mechanism comprises actuation means, which are operatively associated with moving contact means for coupling/uncoupling with respect to corresponding fixed contact means; the moving contact means comprise at least one moving contact 2 and the fixed contact means comprise at least one corresponding fixed contact 1. The actuation means comprise means for the actuation and release of the moving contact, which are operatively connected to means for the actuation or switching of the state of the circuit breaker by virtue of suitable connection means; in particular, the switching means are constituted by the arm 5 for actuating the circuit breaker, which is available to the action of an operator, while the connection means can be constituted by the U-shaped member 8 or by a linkage or by any other element suitable for the purpose.

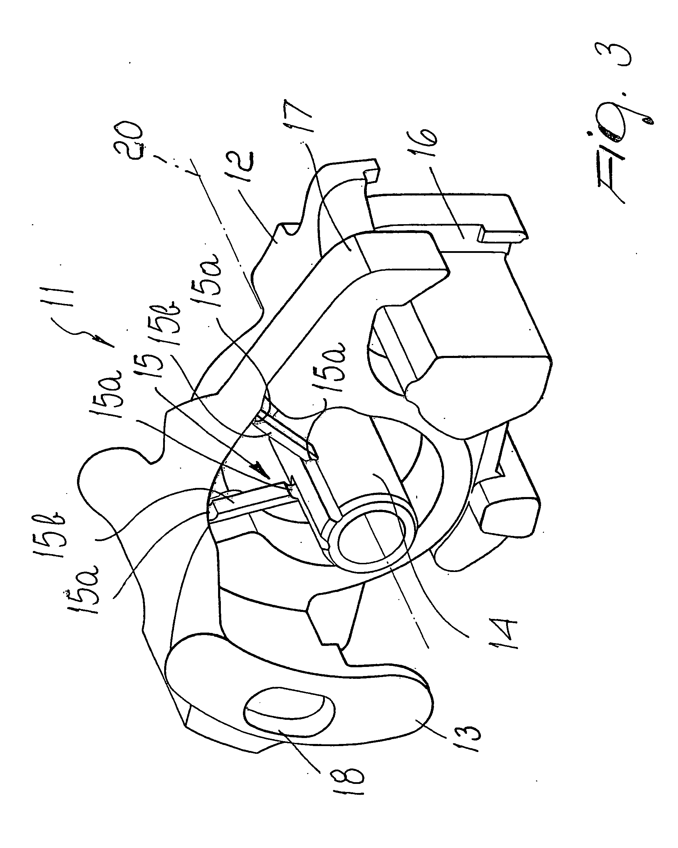

In the embodiment of the kinematic mechanism according to the invention, the means for the actuation and release of the moving contact 2 comprise a single body, designated by the reference numeral 11 in Figure 3, provided with a first portion 12, which is suitable to be operatively associated with the moving contact means and with the connection means 8, a second portion 13, which is suitable to be operatively associated with the connection means 8, and a third portion 15 for connection between the first two portions.

Advantageously, as shown in Figure 3, the first and second portions 12 and 13 are arranged coaxially on a common rotation axis 20 and are connected to each other by virtue of a third portion 15, which comprises at least one first elastic and resilient element. In this manner, the third portion 15 allows a mutual rotation of the first and second portions 12 and 13 with respect to the common rotation axis 20, with recovery of the non-deformed configuration at the end of the operation. The single body 11 therefore integrates monolithically the structure and the functions performed in the known art by two or more levers with corresponding springs, and can be considered as a compliant mechanism, i.e., as a mechanism that when subjected to mechanical stress undergoes deformation and then resumes the initial configuration once the operation has ended.

In particular, in the embodiment shown in Figure 3, the body 11 is made entirely of plastic, with a first portion 12 that has a hollow cylindrical element 14 on which the moving contact 2 is arranged and is suitable to facilitate the mounting of the body 11 on a pivot of the enclosure of the circuit breaker, and a seat 16 that is suitable to receive one end of the U-shaped member 8; the second portion 13 has a first end 17, which is hook-shaped and suitable to interact with said U-shaped member 8, and a second end in which there is a slot 18 for optional coupling to the kinematic mechanism of an additional protection device and/or circuit breaker.

In turn, the third portion 15 comprises at least one rod-like body that lies transversely to the axis 20 and comprises at least one first elastic and resilient element 15a and at least one first rigid element 15b; the thickness of the first elastic and resilient element 15a is different, particularly lower, than the thickness of the first rigid element 15b. Said elastic and resilient element 15a can be arranged so that it is contiguous to one of the two portions 12 (or 13) and so that the rigid element 15b connects it to the other portion 13 (or 12); as an alternative, the rod-like body can be shaped so as to have a first elastic and resilient element 15a arranged in a central position and first and second rigid elements 15b that are different in thickness, particularly thicker, than the element 15a and protrude on mutually opposite sides with respect to the element 15a and connect it respectively to the first portion 12 and to the second portion 13. Clearly, it is possible to provide the third portion 15 with a combination of the preceding solutions and by using embodiments that differ from those of a rod-like body, so long as said third portion in any case has at least one elastic and resilient element suitable to facilitate the mutual movement of the two portions 12 and 13 and resumption of the non-deformed configuration once the operation has been completed.

In a preferred embodiment, shown in Figure 3, the third portion 15 comprises two rod-like bodies that lie transversely with respect to the common rotation axis 20 and both have a first elastic and resilient element 15a connected to the first portion 12, for example to the cylindrical element 14, a second elastic and resilient element 15a connected to the second portion 13, and a rigid element 15b that connects the two corresponding elastic and resilient elements 15a. The two elastic and resilient elements 15a have different thicknesses, and in particular are thinner, with respect to the rigid element 15b.

With this solution, the body 11, by virtue of the configuration of the third portion 15, forms an articulated mechanism with four rods, in particular an articulated parallelogram that allows to perform its intended task in a functionally fully efficient manner, in practice replacing the functions performed in the known art by two levers with the corresponding coupling spring, in the specific case the release lever 3, the contact-carrying lever 4, and the torsion spring 7. If the body 11 is used in the circuit breaker of Figure 1, if a possible fault occurs the intervention of a protection device, for example a relay, in fact causes the impact of the release element 9 on the second portion 13, which by virtue of the deformability of the third portion 15 rotates with respect to the first portion 12, temporarily disengaging the U-shaped member 8; in this situation, and in a manner that is functionally fully similar to the background art, the body 11, under the action of the spring 10, is free to rotate together with the moving contact 2 about the axis 20, causing the separation of the contacts; at the end of the actuation, the body 11, by virtue of the resilience and elastic return characteristics of the third portion 15, has resumed its non-deformed configuration, with the hook-shaped end 17 reengaged with the U-shaped member 8. In this position, the circuit breaker can be reset by acting on the arm 5, which by virtue of the U-shaped member 8 drags the body 11 and returns the entire assembly to the initial position with coupled contacts.

As an alternative, the third portion 15 can be provided by means of a metallic insert provided with a part that is at least partially embedded in the first portion 12 and a part that is at least partially embedded in the second portion 13. With this solution also, the metallic insert is an integral part of the body 11, which thus remains monolithic.

The kinematic mechanism according to the invention, provided by using the single body 11, can be used not only in the automatic circuit breaker of Figure 1 but also, with the same purposes and advantages and without requiring substantial modifications, in various kinds of low-voltage protection device and/or circuit breaker, for example magnetothermal circuit breakers, miniature circuit breakers, automatic fast-opening circuit breakers, residual current-operated circuit breakers, current limiting circuit breakers, et cetera, and in accessory devices that can be coupled to said circuit breakers, such as under-voltage relays, shunt tripping relays, circuit breaker status indicators, et cetera. Accordingly, the present invention also relates to a low-voltage circuit breaker and to an auxiliary or accessory device for a low-voltage circuit breaker associated therewith, each **characterized in that** it comprises a kinematic mechanism according to the present invention.

Examples of accessory or auxiliary device are described in European Patent applications no. 99200908.4, 99200905.0, 99204054.3, 99204335.6; these devices, both when they transmit a motion to the associated circuit breaker and when they receive it, generally have a kinematic mechanism that substantially replicates the kinematic mechanism of the associated circuit breaker and normally also comprise an actuation arm, which is generally controlled by the arm of the associated circuit breaker, a pair of levers that are mutually coupled by a dedicated spring, and a U-shaped member or linkage for connection between the pair of levers and said arm.

According to the present invention, the body 11, used in the accessory device instead of the pair of levers and of the dedicated spring, keeps entirely unchanged the above described functions and can be associated operatively with the moving contact means of the circuit breaker, for example by inserting a pivot of the kinematic mechanism of the circuit breaker in the slot 18 or by providing, on said body 11, a pivot for connection to the mechanism of the circuit breaker, for example instead of the slot 18; in these cases, the part designated by the reference numeral 13 in Figure 3 would constitute the first portion of the body 11, i.e., the portion that is operatively associated with the connection means 8 and with the moving contact means, while the part designated by the reference numeral 12 would constitute the second portion operatively connected only to the connection means 8; in these accessory devices, since the moving contact means are provided inside the associated circuit breaker, the cylindrical element 14 is specifically meant to be fitted on the corresponding pivot for fixing to the corresponding enclosure and does not also act as moving contact support.

In practice it has been found that the kinematic mechanism according to the present invention fully achieves the intended aim and objects, since it allows to reduce the number of components required and in particular to replace with a single body the functions that in the known art required the use of two levers plus a dedicated spring. This solution also allows to facilitate the design, calibration and setting of the mechanism and most of all to simplify the assembly of the various parts and to reduce significantly, or even eliminate, any clearance, vibration and noise that might occur.

The kinematic mechanism thus conceived is susceptible of numerous modifications and variations, all of which are within the scope of the inventive concept. Thus, for example, as mentioned, in addition to being able to modify the constructive configuration of the third portion 15 by adopting a body that is shaped differently with respect to a rod-like configuration, the remaining parts of the two portions 12 and 13 might also have different shapes, so long as this occurs in a manner that is compatible with the application.

## Claims

1. A kinematic mechanism for a low-voltage protection and/or current interruption device, comprising actuation means that are operatively associated with moving contact means that can be coupled/uncoupled with respect to corresponding fixed contact means, the moving contact means comprising at least one moving contact and the fixed contact means comprising at least one fixed contact, said actuation means comprising means for actuating and releasing the moving contact which are operatively connected to an actuation arm by virtue of connection means, whereby said means for the actuation and release of the moving contact comprise a body (11) that has a first portion (12), which is operatively associated with said moving contact means and with said connection means (8), and a second portion (13), which is operatively associated with said connection means, the first and second portions being arranged coaxially on a common rotation axis (20), **characterised by** the first and second portions being connected by virtue of a third portion (15) that comprises at least one first elastic and resilient element, said third portion allowing a mutual rotation of the first and second portions with respect to said common rotation axis.

2. The kinematic mechanism according to claim 1, **characterized in that** said third portion comprises at least one first elastic and resilient element and at least one first rigid element.

3. The kinematic mechanism according to claim 1 or 2, **characterized in that** said body is a resilient mechanism.

4. The kinematic mechanism according to one or more of the preceding claims, **characterized in that** said third portion comprises at least one first rod-like body that lies transversely with respect to said common rotation axis and has at least one first elastic and resilient element that is connected to said first portion and at least one first rigid element that connects said first elastic and resilient element to said second portion, said first elastic and resilient element and said first rigid element having mutually different thicknesses.

5. The kinematic mechanism according to one or more of claims 1 to 3, **characterized in that** said third portion comprises at least one first rod-like body that lies transversely with respect to said common rotation axis and has at least one first elastic and resilient element that is connected to said second portion, and at least one first rigid element that connects said first elastic and resilient element to said first portion, said first elastic and resilient element and said first rigid element having mutually different thicknesses.

6. The kinematic mechanism according to one or more of the preceding claims, **characterized in that** said third portion comprises a pair of rod-like bodies that lie transversely with respect to said common rotation axis and have a first elastic and resilient element, which is connected to said first portion, a second elastic and resilient element, which is connected to said second portion, and a first rigid element, which connects said first and second elastic and resilient elements, said first and second elastic and resilient elements having a different thickness with respect to said first rigid element.

7. The kinematic mechanism according to one or more of claims 1 to 3, **characterized in that** said third portion comprises at least one first rod-like body that lies transversely with respect to said common rotation axis and has at least one first elastic and resilient element and first and second rigid elements that protrude on mutually opposite sides with respect to the first elastic and resilient element and connect it respectively to said first and second portions, said first elastic and resilient element having a different thickness with respect to said first and second rigid elements.

8. The kinematic mechanism according to one or more of claims 1 to 3, **characterized in that** said first elastic and resilient element comprises a metallic insert that is at least partially embedded in said first and second portions.

9. A low-voltage circuit breaker, **characterized in that** it comprises a kinematic mechanism according to one or more of the preceding claims.

10. An auxiliary device for a low-voltage circuit breaker associated therewith, **characterized in that** it comprises a kinematic mechanism according to one or more of claims 1 to 8.

## Patentansprüche

1. Kinematischer Mechanismus für einen Niederspannungsschutz und/oder eine Stromunterbrechungsvorrichtung, aufweisend Betätigungseinrichtungen, die beweglichen Kontakteinrichtungen betrieblich zugeordnet sind, die in Bezug auf korrespondierende feste Kontakteinrichtungen gekoppelt/entkoppelt werden können, wobei die beweglichen Kontakteinrichtungen zumindest eine bewegliche Kontakt- und die feste Kontakteinrichtung aufweisen, die zumindest einen festen Kontakt aufweist, wobei die Betätigungseinrichtungen Einrichtungen zum Betätigen und Freigeben des beweglichen Kontakts aufweisen, die mit einem Betätigungsarm mittels einer Verbindungseinrichtung betrieblich verbunden sind, wobei die Einrichtungen zum Betätigen und Freigeben des beweglichen Kontakts einen Körper (11) aufweisen, der einen ersten Abschnitt (12), der den beweglichen Kontakteinrichtungen und der Verbindungseinrichtung (8) betrieblich zugeordnet ist, und einen zweiten Abschnitt (13) aufweist, der der Verbindungseinrichtung betrieblich zugeordnet ist, wobei der erste und der zweite Abschnitt auf einer gemeinsamen Drehachse (20) koaxial angeordnet sind, **dadurch gekennzeichnet, dass** der erste und der zweite Abschnitt mittels eines dritten Abschnitts (15), der zumindest ein erstes federndes und elastisches Element aufweist, miteinander verbunden sind, wobei durch den dritten Abschnitt ein gemeinsames Drehen des ersten und des zweiten Abschnitts in Bezug auf die gemeinsame Drehachse ermöglicht wird.

2. Kinematischer Mechanismus nach Anspruch 1, **dadurch gekennzeichnet, dass** der dritte Abschnitt zumindest ein erstes federndes und elastisches Element und zumindest ein erstes starres Element aufweist.

3. Kinematischer Mechanismus nach Anspruch 1 oder 2, **dadurch gekennzeichnet, dass** es sich bei dem Körper um einen elastischen Mechanismus handelt.

4. Kinematischer Mechanismus nach einem oder mehreren der vorhergehenden Ansprüche, **dadurch gekennzeichnet, dass** der dritte Abschnitt zumindest einen ersten stabartigen Körper aufweist, der in Bezug auf die gemeinsame Drehachse quer liegend angeordnet ist und zumindest ein erstes federndes und elastisches Element, das mit dem ersten Abschnitt verbunden ist, und zumindest ein erstes starres Element aufweist, das das erste federnde und elastische Element mit dem zweiten Abschnitt verbindet, wobei das erste federnde und elastische Element und das erste starre Element zueinander unterschiedliche Dicken aufweisen.

5. Kinematischer Mechanismus nach einem oder mehreren der Ansprüche 1 bis 3, **dadurch gekennzeichnet, dass** der dritte Abschnitt zumindest einen ersten stabartigen Körper aufweist, der in Bezug auf die gemeinsame Drehachse quer liegend angeordnet ist und zumindest ein erstes federndes und elastisches Element, das mit dem zweiten Abschnitt verbunden ist, und zumindest ein erstes starres Element aufweist, das das erste elastische und federnde Element mit dem ersten Abschnitt verbindet, wobei das erste elastische und federnde Element und das erste starre Element zueinander unterschiedliche Dicken aufweisen.

6. Kinematischer Mechanismus nach einem oder mehreren der vorhergehenden Ansprüche, **dadurch gekennzeichnet, dass** der dritte Abschnitt ein Paar stabartige Körper aufweist, die in Bezug auf die gemeinsame Drehachse quer liegend angeordnet sind und ein erstes federndes und elastisches Element, das mit dem ersten Abschnitt verbunden ist, ein zweites federndes und elastisches Element, das mit dem zweiten Abschnitt verbunden ist, und ein erstes starres Element aufweisen, das das erste und das zweite federnde und elastische Element miteinander verbindet, wobei das erste und das zweite federnde und elastische Element in Bezug auf das erste starre Element eine unterschiedliche Dicke aufweisen.

7. Kinematischer Mechanismus nach einem oder mehreren der Ansprüche 1 bis 3, **dadurch gekennzeichnet, dass** der dritte Abschnitt zumindest einen ersten stabartigen Körper aufweist, der in Bezug auf die gemeinsame Drehachse quer liegend angeordnet ist und zumindest ein erstes federndes und elastisches Element und ein erstes und ein zweites starres Element aufweist, das in Bezug auf das erste federnde und elastische Element auf einander gegenüberliegenden Seiten hervorstehen und dieses jeweils mit dem ersten und dem zweiten Abschnitt verbinden, wobei das federnde und elastische Element in Bezug auf das erste und das zweite starre Element eine unterschiedliche Dicke aufweist.

8. Kinematischer Mechanismus nach einem oder mehreren der Ansprüche 1 bis 3, **dadurch gekennzeichnet, dass** das erste federnde und elastische Element ein metallisches Einsatzstück aufweisen, dass zumindest teilweise in dem ersten und dem zweiten Abschnitt eingebettet ist.

9. Niederspannungs-Leistungsschalter, **dadurch gekennzeichnet, dass** er einen kinematischen Mechanismus gemäß einem oder mehreren der vorhergehenden Ansprüche aufweist.

10. Hilfsvorrichtung für einen derselben zugeordneten Niederspannungs-Leistungsschalter, **dadurch gekennzeichnet, dass** sie einen kinematischen Mechanismus nach einem oder mehreren der Ansprüche 1 bis 8 aufweist.

## Revendications

1. Mécanisme cinématique destiné à un dispositif de protection basse tension et/ou d'interruption de courant, comprenant des moyens d'actionnement qui sont associés fonctionnellement à des moyens de contact mobiles pouvant être couplés/non couplés par rapport à des moyens de contact fixes correspondants, les moyens de contact mobiles comprenant au moins un contact mobile et les moyens de contact fixes comprenant au moins un contact fixe, lesdits moyens d'actionnement comprenant des moyens pour actionner et libérer le contact mobile, qui sont connectés fonctionnellement à un bras d'actionnement par l'intermédiaire de moyens de connexion, dans lequel les moyens pour actionner et libérer le contact mobile comprennent un corps (11) comportant une première partie (12) qui est associée fonctionnellement auxdits moyens de contact mobiles et auxdits moyens de connexion (8), ainsi qu'une deuxième partie (13) qui est associée fonctionnellement auxdits moyens de connexion, la première et la deuxième partie étant disposées co-axialement sur un axe de rotation commun (20), **caractérisé par le fait que** la première et la deuxième parties sont connectées par l'intermédiaire d'une troisième partie (15), laquelle comprend au moins un premier élément élastique et résilient, ladite troisième partie permettant une rotation mutuelle de la première et de la deuxième partie par rapport audit axe de rotation commun.

2. Le mécanisme cinématique selon la revendication 1, **caractérisé en ce que** ladite troisième partie comprend au moins un premier élément élastique et résilient et au moins un premier élément rigide.

3. Le mécanisme cinématique selon la revendication 1 ou 2, **caractérisé en ce que** ledit corps est un mécanisme résilient.

4. Le mécanisme cinématique selon l'une ou plusieurs des revendications précédentes, **caractérisé en ce que** ladite troisième partie comprend au moins un premier corps en forme de tige situé transversalement par rapport audit axe de rotation commun et qui présente au moins un premier élément élastique et résilient qui est relié à ladite première partie et au moins un premier élément rigide qui relie ledit premier élément élastique et résilient à ladite deuxième partie, ledit premier élément élastique et résilient et ledit premier élément rigide présentant des épaisseurs mutuellement différentes.

5. Le mécanisme cinématique selon l'une ou plusieurs des revendications 1 à 3, **caractérisé en ce que** ladite troisième partie comprend au moins un premier corps en forme de tige situé transversalement par rapport audit axe de rotation commun et présentent au moins un premier élément élastique et résilient qui est relié à ladite deuxième partie, et au moins un premier élément rigide qui relie ledit premier élément élastique et résilient à ladite première partie, ledit premier élément élastique et résilient et ledit premier élément rigide présentant des épaisseurs mutuellement différentes.

6. Le mécanisme cinématique selon l'une ou plusieurs des revendications précédentes, **caractérisé en ce que** ladite troisième partie comprend une paire de corps en forme de tige situés transversalement par rapport audit axe de rotation commun et présente un premier élément élastique et résilient qui est relié à ladite première partie, un deuxième élément élastique et résilient qui est relié à ladite deuxième partie, et un premier élément rigide qui relie lesdits premier et deuxième éléments élastiques et résilients, lesdits premier et deuxième éléments élastiques et résilients présentant une épaisseur différente par rapport audit premier élément rigide.

7. Le mécanisme cinématique selon l'une ou plusieurs des revendications 1 à 3, **caractérisé en ce que** ladite troisième partie comprend au moins un premier corps en forme de tige situé transversalement par rapport audit axe de rotation commun et présente au moins un premier élément élastique et résilient ainsi que des premier et deuxième éléments rigides qui font saillie au niveau de côtés mutuellement opposés par rapport au premier élément élastique et résilient et qui le relie respectivement auxdites première et deuxième parties, ledit premier élément élastique et résilient présentant une épaisseur différente par rapport auxdits premier et deuxième éléments rigides.

8. Le mécanisme cinématique selon l'une ou plusieurs des revendications 1 à 3, **caractérisé en ce que** ledit premier élément élastique et résilient comprend un insert métallique qui est au moins partiellement noyé dans lesdites première et deuxième parties.

9. Un disjoncteur basse tension, **caractérisé en ce qu'**il comprend un mécanisme cinématique selon l'une ou plusieurs des revendications précédentes.

10. Dispositif auxiliaire pour un disjoncteur basse tension qui y est associé, **caractérisé en ce que** il comprend un mécanisme cinématique selon l'une ou plusieurs des revendications 1 à 8.
